# EUROPÄISCHE PATENTSCHRIFT

(11) **EP 1 293 697 B1**
(45) Veröffentlichungstag und Bekanntmachung des Hinweises auf die Patenterteilung: **06.01.2010**
(21) Anmeldenummer: 02018770.4
(22) Anmeldetag: 22.08.2002
(51) Int. Cl.: F16D 48/06, B60K 17/28

(54) **Verfahren und Vorrichtung zur Steuerung einer Kupplung**
Method and device to control a clutch
Procédure et dispositif de commande d'embrayage

(30) Priorität: 15.09.2001 DE 10145588
(43) Veröffentlichungstag der Anmeldung: 19.03.2003
(73) Patentinhaber: DEERE & COMPANY, Moline, Illinois 61265-8098 (US)
(72) Erfinder: Reinards, Marco, 54608 Bleialf (DE); Tarasinski, Nicolai, Dr., 67227 Frankenthal (DE); Schäfer, Helmut, 68775 Ketsch (DE)
(74) Vertreter: Magin, Ludwig Bernhard

(56) Entgegenhaltungen:
- EP-A- 0 496 326
- US-A- 4 674 609

## Beschreibung

Die Erfindung betrifft ein Verfahren und eine Vorrichtung zur Steuerung einer Kupplung, insbesondere einer Zapfwellenkupplung, wobei durch Sensoren eine Drehzahlermittlung erfolgt und der Kupplungsschlupf aus den vor und hinter der Kupplung herrschenden Drehzahlen ermittelt wird.

Verfahren bzw. Vorrichtungen zur Steuerung und Regelung von Betriebszuständen an Kupplungen, mit denen der Kraftschluss für den Antrieb von Anbaugeräten realisiert wird, sind in verschiedenen Ausführungen bekannt. Dabei handelt es sich z. B. um Steuerungsvorrichtungen, die auf Drehzahlmessungen basieren, wodurch Aussagen über Betriebszustände in Zapfwellenkupplungen getroffen werden können. So wird in der Offenlegungsschrift DE-A-40 01 398 eine Zapfwellenkupplung vorgestellt, die durch eine Elektronik-Auswerteeinheit angesteuert wird und somit auf kritische Betriebszustände reagieren kann. Insbesondere soll ein Schlupf in der Zapfwellenkupplung vermieden werden, um einen erhöhten Verschleiß oder eine Zerstörung der Zapfwellenkupplung zu vermeiden. Es werden Sensoren eingesetzt, die motorspezifische Daten, wie Drehzahl und Drehmoment aufnehmen, so dass die Elektronik-Auswerteeinheit auf bestimmte Grenzwerte reagieren kann. So wird beispielsweise bei Unterschreitung eines Motordrehzahlgrenzwertes die Zapfwellenkupplung geöffnet und der Antriebsstrang entlastet.

Die DE-A-40 01 398 schlägt des Weiteren vor, die Drehzahlwerte am Zapfwellenkupplungsein- und -ausgang mittels geeigneter Sensoren abzugreifen und durch Vergleich dieser Werte den Kupplungsschlupf zu überwachen. Bei Überschreitung von vorgebbaren Schlupfwerten schaltet die Elektronik-Auswerteeinheit die Zapfwellenkupplung über ein Steuerventil ab. Eine Öffnung der Kupplung bei Überschreitung der Schlupfgrenzwerte führt jedoch zu einer Unterbrechung des Arbeitsprozesses, der erst nach erneutem Einkuppelvorgang wieder aufgenommen wird. Ähnliches gilt für den Fall, dass bei Unterschreitung eines motorseitigen Drehzahlgrenzwertes die Zapfwellenkupplung geöffnet wird, um den Antriebsstrang des Motors zu entlasten. Hierbei kann ein erneuter Einkuppelvorgang nur unter eingeschränkten Arbeitsbedingungen realisiert werden.

Eine weitere Kupplung ist aus EP-A2-0 496 326 bekannt.

Die der Erfindung zugrunde liegende Aufgabe wird darin gesehen, ein Verfahren und eine Vorrichtung zur Steuerung einer Kupplung der eingangs genannten Art anzugeben, durch welche die vorgenannten Probleme überwunden werden. Insbesondere soll in der Kupplung eine Lasterkennung und -überwachung während des Betriebes von Anbaugeräten erfolgen, so dass Überlastzustände am Antriebsstrang sowie am Anbaugerät und den damit verbundenen Komponenten vermieden werden können.

Die Aufgabe wird erfindungsgemäß durch die Lehre des Patentanspruchs 1 oder 9 gelöst. Weitere vorteilhafte Ausgestaltungen und Weiterbildungen der Erfindung gehen aus den entsprechenden Unteransprüchen hervor.

Erfindungsgemäß wird der Kupplungsschlupf laufend auf einen konstanten Wert eingestellt und gehalten. Aus dem konstanten Schlupfwert und einem dem Kupplungsdruck entsprechendem Wert wird die durch die Kupplung übertragene Last, insbesondere das Drehmoment, ermittelt.

Während des Betriebs wird der Kupplungsdruck abgesenkt, bis die Kupplung beginnt, mit einem vorgebbaren Wert zu schlupfen. Ein Regler hält während des Betriebs mit der Schlupfregelung den Schlupf unabhängig vom Drehmoment an der Ausgangsseite der Kupplung konstant, indem der Kupplungsdruck aktiv abgesenkt bzw. angehoben wird. Da das übertragene Kupplungsmoment in etwa linear mit dem Kupplungsdruck und dem Ventilstrom eines die Kupplung ansteuernden Ventils zusammenhängt, können diese Größen zur Drehmomentermittlung an der Ausgangsseite der Kupplung herangezogen werden. Je höher der Ventilstrom und damit das Druckniveau ist, bei dem die Kupplung mit dem gewünschten Schlupf betrieben werden kann, desto höher ist das Drehmoment an der Ausgangsseite der Kupplung.

Die Lasterkennung mittels elektronischer Schlupfregelung hat sich insbesondere bei einem Zapfwellenantrieb als realisierbar erwiesen. Die Regelung ist in der Lage so schnell auf Laständerungen zu reagieren, dass ein stabiler Betrieb mit relativ konstantem Schlupf möglich ist. Bei Versuchen auf einer Zapfwellenbremse mit definierter Last konnte nachgewiesen werden, dass der Kupplungsdruck und damit der Ventilstrom des die Zapfwellenkupplung ansteuernden Druckregelventils ein Maß für das Drehmoment an der Zapfwelle ist und dass somit eine Lasterkennung während des Betriebs möglich ist. Ein weiterer Vorteil der Schlupfregelung ist die Schutzfunktion gegen Überlast. Stoßbelastungen und damit verbundene Drehmomentspitzen im Zapfwellenantriebsstrang während des Betriebs werden durch kurzzeitigen höheren Schlupf der Zapfwellenkupplung abgefangen und gedämpft.

Die elektronische Regelung des Kupplungsschlupfes erfolgt vorzugsweise entsprechend eines vorgebbaren Richtschlupfwertes. Dieser liegt zweckmäßigerweise im Bereich von 0,1 bis 2,0 %. Als besonders geeignet hat sich ein Richtschlupfwert von ca. 0,5 % bewährt.

Zur Einstellung bzw. Regelung des Kupplungsschlupfes wird der Kupplungsdruck über ein Ventil, vorzugsweise ein proportionales Druckregelventil, variiert und der Ventilstrom als Regelgröße zur Schlupfregelung herangezogen.

Gemäß einer bevorzugten Weiterbildung der Erfindung wird die Regelgröße durch Vorgabe einer maximalen Regelgröße auf einen maximalen Wert begrenzt. Mit Hilfe dieser Regelung kann ein maximales Drehmoment eingestellt werden, das am Zapfwellenstummel während des Betriebs nicht überschritten wird. Hierdurch wird eine Schutzfunktion für einen Fahrzeugantriebstrang, das Zapfwellengetriebe und den Antrieb des Anbaugerätes bereitgestellt.

Die Vorgabe der maximalen Regelgröße kann in vorteilhafter Weise manuell oder durch eine Identifizierungsvorkehrung am Anbaugerät automatisch erfolgen. Dies geschieht beispielsweise durch eine "Plug and Play" Lösung, bei der eine Erkennung auf übliche Weise durch eine CAN-, ISO-, LBS- oder ähnliche Schnittstelle erfolgt.

Die zur Durchführung des vorhergehend beschriebenen Verfahrens eingesetzte Vorrichtung zur Steuerung einer Kupplung, insbesondere einer Zapfwellenkupplung, enthält Sensoren und eine Auswerteeinrichtung. Durch die Sensoren erfolgt eine Drehzahlermittlung beidseitig der Kupplung. Die Auswerteeinrichtung, welche in eine elektronische Steuerung integriert sein kann, bestimmt unter Berücksichtigung des Übersetzungsverhältnisses der Kupplungsanordnung den Kupplungsschlupf. Erfindungsgemäß werden Mittel eingesetzt, mit denen laufend ein dem Kupplungsdruck entsprechender Wert bestimmt wird. Durch gesteuerte zeitliche Änderung des dem Kupplungsdruck entsprechenden Wertes wird der Kupplungsschlupf laufend auf einen konstanten Wert eingestellt und gehalten. Aus dem konstanten Schlupfwert und einem dem Kupplungsdruck entsprechenden Wert wird das durch die Kupplung übertragene Drehmoment permanent ermittelt.

Vorzugsweise wird für die elektronische Steuerung oder Regelung des Kupplungsschlupfes ein integrierter Regler verwendet, zweckmäßigerweise handelt es sich hierbei um einen entsprechend der DIN 19226 ausgebildeten Regler.

Die Erfindung bietet den Vorteil, dass durch die Schlupfregelung der Kupplung eine Last-, insbesondere eine Drehmomenterfassung während des Betriebes mit einfachen Messmitteln erfolgen kann und dass der Bedienperson laufend Informationen über den Lastzustand an der Ausgangsseite der Kupplung, beispielsweise an einer Zapfwelle, zur Verfügung stehen. Des Weiteren lässt sich durch geeignete Vorgabe einer maximalen Regelgröße eine Drehmomentbegrenzung an der Zapfwelle erzielen, wodurch Antriebsstrang und Anbaugerät gegen Überlastungen geschützt sind. Außerdem werden schlagartige Drehmomentänderungen an der Zapfwelle durch kurzzeitige Erhöhung des Kupplungsschlupfes aufgefangen. Ein weiterer Vorteil besteht darin, dass zur Realisierung der hier beschriebenen Erfindung keine erhebliche Aufrüstung hinsichtlich Sensorik erfolgen muss und somit das hier dargestellte Verfahren eine äußerst wirtschaftliche Lösung darstellt.

Das erfindungsgemäße Verfahren bzw. die Vorrichtung werden bevorzugt bei Landmaschinen eingesetzt, an deren Zapfwelle Anbaugeräte anschließbar sind. Bei der Zapfwellenkupplung handelt es sich vorzugsweise um eine nasse Lamellenkupplung, wie sie beispielsweise bei John Deere Ackerschleppern der Serie 6010 bis 6910 verwendet werden. Diese Kupplungen haben auch bei Schlupf eine sehr hohe Standfestigkeit.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

### Es zeigt:

- Fig. 1: die schematische Darstellung einer erfindungsgemäßen Steuervorrichtung zur Schlupfregelung einer Zapfwellenkupplung,
- Fig. 2: einen Regelkreis zur Regelung des Kupplungsschlupfes mit den im Regelungskonzept berücksichtigten Komponenten und Größen und
- Fig. 3: ein Diagramm, anhand dessen das Prinzip der Reglerwirkungsweise eines Fensterreglers erläutert wird.

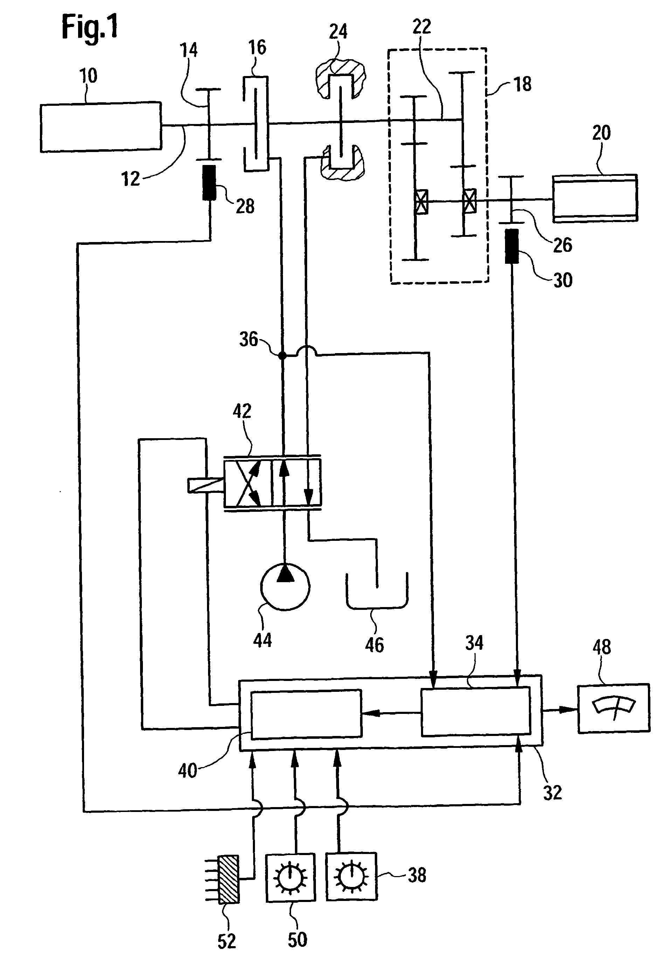

Gemäß Fig. 1 treibt ein Verbrennungsmotor 10 eine Antriebswelle 12 an, auf der ein Zahnrad 14 befestigt ist, das zur Motordrehzahlbestimmung herangezogen wird. Eine hydraulische Zapfwellenkupplung 16 verbindet die Antriebswelle 12 mit einem zweistufigen Zapfwellengetriebe 18 welches eine Abtriebsdrehzahl und ein Abtriebsmoment auf eine Zapfwelle 20 überträgt. An die Zapfwelle 20, bzw. den Zapfwellenstummel, ist ein nicht gezeigtes Anbaugerät anschließbar. Des Weiteren treibt der Verbrennungsmotor 10 über ein nicht gezeigtes Fahrzeuggetriebe die nicht gezeigten Fahrzeugräder an.

Die Eingangsstufe 22 des Zapfwellengetriebes 18 ist mit einer hydraulischen Bremse 24 verbunden, durch die sich der gesamte Zapfwellenabtriebsstrang abbremsen und stillsetzen lässt. Die Zapfwelle 20 ist zur Abtriebsdrehzahlbestimmung ebenfalls mit einem Zahnrad 26 versehen. Durch zwei Drehzahlsensoren 28 und 30 werden auf übliche Weise die Drehzahlen der Antriebswelle 12 sowie der Zapfwelle 20 aufgenommen und an eine Auswerteeinrichtung 34 gegeben, welche in eine Steuerung 32 integriert ist. Die Auswerteeinrichtung 34 bestimmt den in der Kupplung 16 auftretenden Schlupf und berücksichtigt hierbei das Übersetzungsverhältnis des Zapfwellengetriebes 18, welches durch einen geeigneten, nicht näher dargestellten Sensor erfasst wird.

Die Kupplung 16 und die Bremse 24 werden durch ein Proportionalventil 42 gesteuert, welches in einer ersten Stellung, wie dargestellt, die Kupplung 16 mit einer Hydraulikpumpe 44 und die Bremse 24 mit einem drucklosen Vorratsbehälter 46 verbindet. In einer zweiten Stellung verbindet das Proportionalventil 42 die Bremse 24 mit der Hydraulikpumpe 44 und die Kupplung 16 mit dem Vorratsbehälter 46.

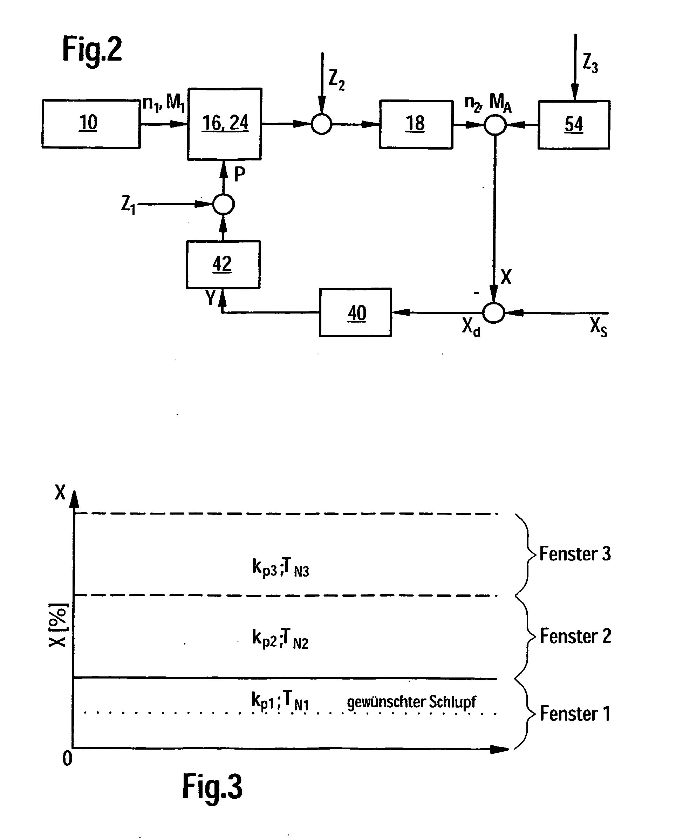

Ein Drucksensor 36 liefert der Auswerteeinheit 34 einen dem Kupplungsdruck entsprechenden und zur Bestimmung des an der Zapfwelle 20 wirkenden Drehmoments benötigten Wert. Die Steuerung 32 ist zur Einstellung eines zu regelnden Schlupfwertes mit einer Sollwerteingabevorrichtung 38 versehen. Unter Vorgabe eines Schlupfsollwertes wird ein Regler 40 verwendet, der entsprechend einer aus den Fig. 2 und 3 hervorgehenden Regelungsstrategie Signale an die Steuerung 32 abgibt, um den Ventilstrom des elektro-magnetisch betätigten Proportionalventils 42 derart zu steuern, dass der gewünschte Schlupfsollwert in der Kupplung 16 eingehalten wird.

Eine Anzeigevorrichtung 48 erhält Signale von der Auswerteeinheit 34 und versorgt die Bedienperson mit einer permanenten Anzeige des an der Zapfwelle wirkenden Drehmoments. Um Überlastzuständen am An- bzw. Abtriebstrang zu vermeiden, kann durch eine manuelle Einstellvorrichtung 50, beispielsweise durch ein in der Fahrzeugkabine angeordnetes Drehpotentiometer, der Ventilstrom und damit der Kupplungsdruck bzw. das von der Kupplung 16 maximal übertragbare Drehmoment begrenzt werden.

Des Weiteren ist eine Identifizierungsvorrichtung vorgesehen, anhand derer erkannt werden kann, welches Anbaugerät an die Zapfwelle 20 angeschlossen ist. Für jeden Anbaugerätetyp ist ein maximaler Drehmomentwert in der Steuerung 32 hinterlegt, so dass in Abhängigkeit des verwendeten Anbaugerätes eine Drehmomentbegrenzung erfolgen kann. Zur Identifizierung kann beispielsweise eine "Plug and Play" Lösung verwendet werden, bei der eine Erkennung auf übliche Weise durch eine CAN-, ISO-, LBS- oder ähnliche Schnittstelle erfolgt. Dies ermöglicht es, automatisch individuelle Drehmomentbegrenzungen für Anbaugeräte vorzunehmen.

Die zur Schlupfregelung verwendete Regelungsstrategie geht aus Fig. 2 hervor. Der mit der Drehzahl n₁ umlaufende Verbrennungsmotor 10 liefert das Drehmoment M₁, welches mittels einer Kupplung 16 und eines Getriebes 18 auf die Zapfwelle 20 übertragen wird. Die Zapfwelle 20 dreht mit einer Drehzahl n₂ und gibt an das Anbaugerät 54 das Abtriebsmoment M_{A} ab. Unter Einbeziehung der Drehzahlen n₁ und n₂, des Übersetzungsverhältnisses des Zapfwellengetriebes 18 sowie der Störgröße Z₂, welche z. B. Reibwertänderungen oder Verschleißerscheinungen in der Kupplung berücksichtigt, und der Störgröße Z₃, welche die Laständerungen des Anbaugerätes 54 berücksichtigen, ergibt sich ein Schlupf-Istwert x, der mit einem vorgegebenen Schlupf-Sollwert xₛ von z.B. 0,5 % verglichen wird.

Der resultierende Schlupf-Differenzwert x_{d} dient dem Regler 40, der vorzugsweise als Fensterregler mit der in Fig. 3 dargestellten Wirkungsweise ausgebildet ist, als Stellgröße. Entsprechend des Schlupf-Differenzbetrages regelt der Regler 40 den als Regelgröße y dienenden Ventilstrom, durch den der in der Kupplung 16 bzw. an der Bremse 24 herrschende Druck p geregelt wird. Dabei wird eine Störgröße Z₁ berücksichtigt, die z. B. auf Druckschwankungen beruht. Damit stellt sich ein möglichst kleiner Schlupf-Differenzwert x_{d} ein, der im Idealfall Null ist.

Da bei konstantem bzw. geregeltem Schlupfwert ein fester Zusammenhang zwischen dem an der Zapfwelle 20 wirkende Abtriebsmoment M_{A} und dem Ventilstroms besteht, welcher sich durch Versuche oder theoretische Berechnungen ermitteln lässt, kann somit aus dem vorliegenden Schlupfwert und dem Ventilstrom das Abtriebsmoment M_{A} bestimmt werden.

Während des Betriebs der Zapfwelle 20 geht es hauptsächlich darum, einen optimierten Regler einzusetzen, durch den ein stabiler Betrieb gewährleistet ist und ein gutes Führungs- und Störverhalten erreicht wird. Es soll also kein erhöhter Schlupf auftreten. Tritt jedoch während des Betriebs am Zapfwellenstummel sprunghaft ein erhöhtes Drehmoment auf und übersteigt infolgedessen der Schlupf den vorgegebenen Wert von beispielsweise 0,5 %, so reagiert die Regelung entsprechend und erhöht den Ventilstrom, was zu einer Kupplungsdruckerhöhung führt. Bei sehr schnellen Änderungen im Kraftbedarf des Anbaugerätes kann kurzzeitig sehr großer Schlupf auftreten, der nicht erwünscht ist, so dass die Regelung angemessen schnell reagieren muss, um den Schlupf möglichst konstant auf einen Wert zu halten.

Um eine optimierte bzw. schnelle Reglerwirkung zu gewährleisten wird daher ein Fensterregler, mit den in Fig. 3 dargestellten Regelwirkungsweisen eingesetzt. Dieser Regler wird so programmiert, dass entsprechend der Höhe des sich einstellenden Schlupf-Istwertes x mehrere Regelbereiche (Fenster) zum Einsatz kommen, in denen die in der DIN 19266 definierten Reglerparameter k_{P} und T_{N} unterschiedlich gewählt werden und somit die Regleranteile in ihrem Proportional- und Integralverhalten ein je nach Bedarf mehr oder weniger dynamisches Regelverhalten aufweisen.

Bei großen Regelabweichungen reagiert der Regler aggressiver und damit schneller als bei kleinen Abweichungen. Dies führt dazu, dass der Zeitanteil erhöhter Schlupfwerte deutlich geringer wird. Es ist möglich, den Regler individuell und optimal auf die auftretenden Regelabweichungen, bedingt durch die Störungssprünge, einzustellen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Verfahren zur Steuerung einer Kupplung (16), insbesondere einer Zapfwellenkupplung, bei dem durch Sensoren (28, 30) eine Drehzahlermittlung erfolgt und der Kupplungsschlupf aus den vor und hinter der Kupplung (16) herrschenden Drehzahlen ermittelt wird, **dadurch gekennzeichnet, dass** der Kupplungsschlupf laufend auf einen konstanten Wert eingestellt und gehalten wird und dass aus dem konstanten Schlupfwert und einem dem Kupplungsdruck entsprechenden Wert die durch die Kupplung (16) übertragene Last, insbesondere das Drehmoment, ermittelt wird.

2. Verfahren nach Anspruch 1, **dadurch gekennzeichnet, dass** der Kupplungsschlupf entsprechend eines vorgebbaren Richtschlupfwertes geregelt wird.

3. Verfahren nach Anspruch 2, **dadurch gekennzeichnet, dass** der vorgebbare Richtschlupfwert 0,1 - 2,0 %, vorzugsweise ca. 0,5 % beträgt.

4. Verfahren nach einem der Ansprüche 1 bis 3, **dadurch gekennzeichnet, dass** zur Einstellung bzw. Regelung des Kupplungsschlupfes der Kupplungsdruck über ein Ventil, insbesondere ein Proportionalventil (42), variiert wird.

5. Verfahren nach Anspruch 4, **dadurch gekennzeichnet, dass** der Ventilstrom als Regelgröße zur Schlupfregelung herangezogen wird.

6. Verfahren nach einem der Ansprüche 1 bis 5, **dadurch gekennzeichnet, dass** die Regelgröße auf einen maximalen Wert begrenzt wird.

7. Verfahren nach Anspruch 6, **dadurch gekennzeichnet, dass** die Vorgabe der maximalen Regelgröße manuell erfolgt.

8. Verfahren nach Anspruch 6 oder 7, **dadurch gekennzeichnet, dass** die Vorgabe der maximalen Regelgröße durch eine Identifizierungsvorkehrung automatisch erfolgt, wobei insbesondere eine "Plug and Play" Lösung verwendet wird, bei der eine Erkennung über eine CAN-, ISO-, LBS- oder ähnliche Schnittstelle (52) erfolgt.

9. Vorrichtung zur Steuerung einer hydraulisch betriebenen Kupplung (16), insbesondere einer Zapfwellenkupplung, mit Sensoren (28, 30), durch die beidseitig der Kupplung (16) eine Drehzahlermittlung erfolgt, und mit einer Auswerteeinrichtung (34), durch die der Kupplungsschlupf bestimmt wird, **gekennzeichnet durch** Mittel, die einen dem Kupplungsdruck entsprechenden Wert bestimmen, und **durch** eine Steuerung (32), die den Kupplungsschlupf laufend auf einen konstanten Wert einstellt und hält und die aus dem konstanten Schlupfwert und einem dem Kupplungsdruck entsprechenden Wert die **durch** die Kupplung (16) übertragene Last, insbesondere das Drehmoment, ermittelt.

10. Vorrichtung nach Anspruch 9, **dadurch gekennzeichnet, dass** die Mittel eine Steuerung (32) enthalten, in der ein Regler (40) zur Regelung des Kupplungsschlupfes implementiert ist.

11. Vorrichtung nach Anspruch 10, **dadurch gekennzeichnet, dass** der Regler (40) ein in Abhängigkeit des an der Kupplung (16) herrschenden Schlupfes variabler Fensterregler ist.

12. Vorrichtung nach Anspruch 9 bis 11, **dadurch gekennzeichnet, dass** Vorgabemittel (38) vorgesehen sind, mit denen ein gewünschter Schlupf-Sollwert einstellbar ist.

13. Vorrichtung nach einem der Ansprüche 9 bis 12, **dadurch gekennzeichnet, dass** zur Einstellung des Kupplungsdrucks ein Proportionalventil (42) eingesetzt wird.

14. Vorrichtung nach einem der Ansprüche 9 bis 13, **dadurch gekennzeichnet, dass** Einstellmittel (50) vorgesehen sind, mit denen eine maximale Last, insbesondere ein maximales Drehmoment durch Vorgabe eines maximal wirkenden Ventilstroms, vorgebbar ist.

15. Vorrichtung nach Anspruch 9 bis 13, **dadurch gekennzeichnet, dass** Erkennungsmittel für eine automatisierte Identifizierung des Anbaugerätes, vorzugsweise eine "Plug and Play" Lösung, bei der eine Erkennung über eine CAN-, ISO-, LBS- oder ähnliche Schnittstelle (52) erfolgt, vorgesehen sind, und dass abhängig von der Identifizierung ein zugehöriges maximal wirkendes Drehmoment durch Festlegung des maximal wirkenden Ventilstroms automatisiert vorgegeben wird.

16. Vorrichtung nach Anspruch 9 bis 15 **dadurch gekennzeichnet, dass** Mittel, vorzugsweise eine Drehmomentanzeige (48), vorgesehen sind, mit denen das an der Zapfwelle (20) wirkenden Drehmoment permanent angezeigt und/oder überwacht wird.

## Claims

1. Method for controlling a clutch (16), in particular a power take-off clutch, in which method a rotational speed is acquired by means of sensors (28, 30), and the clutch slip is acquired from the rotational speeds prevailing in front of and behind the clutch (16), **characterized in that** the clutch slip is continuously set to a constant value and held there, and **in that** the load, in particular the torque, transmitted by the clutch (16) is acquired from the constant slip value and a value corresponding to the clutch pressure.

2. Method according to Claim 1, **characterized in that** the clutch slip is regulated in accordance with a predefinable slip guide value.

3. Method according to Claim 2, **characterized in that** the predefinable slip guide value is 0.1 - 2.0%, preferably approximately 0.5%.

4. Method according to one of Claims 1 to 3,
**characterized in that**, in order to set or regulate the clutch slip, the clutch pressure is varied by means of a valve, in particular a proportional valve (42).

5. Method according to Claim 4, **characterized in that** the valve current is used as a regulating variable for regulating the slip.

6. Method according to one of Claims 1 to 5,
**characterized in that** the control variable is limited to a maximum value.

7. Method according to Claim 6, **characterized in that** the maximum control variable is predefined manually.

8. Method according to Claim 6 or 7, **characterized in that** the maximum control variable is predefined automatically by means of an identification measure, wherein, in particular, a "plug and play" solution is used in which detection is carried out via a CAN, ISO or LBS interface (52) or similar.

9. Device for controlling a hydraulically operated clutch (16), in particular a power take-off clutch, having sensors (28, 30) by means of which a rotational speed is acquired on both sides of the clutch (16), and having an evaluation device (34) by means of which the clutch slip is determined, **characterized by** means which determine a value corresponding to the clutch pressure, and by a controller (32) which continuously sets the clutch slip to a constant value and holds it there, and which acquires, from the constant slip value and a value corresponding to the clutch pressure, the load, in particular the torque, which is transmitted by the clutch (16).

10. Device according to Claim 9, **characterized in that** the means contain a controller (32) in which a regulator (40) for regulating the clutch slip is implemented.

11. Device according to Claim 10, **characterized in that** the regulator (40) is a window regulator which is variable as a function of the slip prevailing at the clutch (16).

12. Device according to Claims 9 to 11, **characterized in that** predefining means (38) are provided with which a desired slip setpoint value can be set.

13. Device according to one of Claims 9 to 12,
**characterized in that** a proportional valve (42) is used for setting the clutch pressure.

14. Device according to one of Claims 9 to 13,
**characterized in that** setting means (50) are provided with which a maximum load, in particular a maximum torque, can be predefined by predefining a maximum acting valve current.

15. Device according to Claims 9 to 13, **characterized in that** detection means are provided for automated identification of the attachment, preferably a "plug and play" solution in which detection is carried out by means of a CAN, ISO or LBS interface (52) or similar, and **in that** an associated maximum acting torque is predefined in an automated fashion as a function of the identification by defining the maximum acting valve current.

16. Device according to Claims 9 to 15, **characterized in that** means, preferably a torque display (48), are provided with which the torque acting on the power take-off (20) is continuously displayed and/or monitored.

## Revendications

1. Procédé de commande d'un accouplement (16), en particulier d'un accouplement pour prise de force, dans lequel la vitesse de rotation est déterminée par des détecteurs (28, 30) et le glissement de l'accouplement est déterminé à partir des vitesses de rotation qui règnent en amont et en aval de l'accouplement (16),
**caractérisé en ce que**
le glissement de l'accouplement est réglé et maintenu en permanence à une vitesse constante et
**en ce que** la charge transmise par l'accouplement (16) et en particulier le couple de rotation sont déterminés à partir de la valeur constante du glissement et d'une valeur qui correspond à la pression d'accouplement.

2. Procédé selon la revendication 1, **caractérisé en ce que** le glissement de l'accouplement est régulé en fonction d'une valeur indicative prédéterminée du glissement.

3. Procédé selon la revendication 2, **caractérisé en ce que** la valeur indicative prédéterminée du glissement est de 0,1 à 2,0 % et de préférence d'environ 0,5 %.

4. Procédé selon l'une des revendications 1 à 3, **caractérisé en ce que** la pression d'accouplement est modifiée par l'intermédiaire d'une vanne et en particulier d'une vanne proportionnelle (42) pour régler ou réguler le glissement de l'accouplement.

5. Procédé selon la revendication 4, **caractérisé en ce que** le débit traversant la vanne est utilisé comme grandeur de régulation du glissement.

6. Procédé selon l'une des revendications 1 à 5, **caractérisé en ce que** la grandeur de régulation est limitée à une valeur maximale.

7. Procédé selon la revendication 6, **caractérisé en ce que** la définition de la grandeur de régulation maximale s'effectue manuellement.

8. Procédé selon les revendications 6 ou 7, **caractérisé en ce que** la définition de la grandeur de régulation maximale est réalisée automatiquement par une disposition d'identification en utilisant en particulier une solution "plug and play" dans laquelle cette détection est réalisée à l'aide d'une interface (52) CAN, ISO, LBS ou similaire.

9. Dispositif de commande d'un accouplement (16) actionné hydrauliquement, en particulier d'un accouplement pour prise de force, qui présente des détecteurs (28, 30) qui déterminent la vitesse de rotation de part et d'autre de l'accouplement (16) et un dispositif d'évaluation (34) qui détermine le glissement de l'accouplement,
**caractérisé par**
des moyens qui déterminent une valeur qui correspond à la pression d'accouplement et
par une commande (32) qui règle et maintient en permanence à une valeur constante le glissement d'accouplement et qui détermine la charge transmise par l'accouplement (16) et en particulier le couple de rotation à partir de la valeur constante du glissement et d'une valeur qui correspond à la pression d'accouplement.

10. Dispositif selon la revendication 9, **caractérisé en ce que** les moyens contiennent une commande (32) dans laquelle est réalisé un régulateur (40) qui régule le glissement d'accouplement.

11. Dispositif selon la revendication 10, **caractérisé en ce que** le régulateur (40) est un régulateur à fenêtre variable qui assure la régulation en fonction du glissement qui règne sur l'accouplement (16).

12. Dispositif selon les revendications 9 à 11,
**caractérisé en ce qu'**il présente des moyens (38) d'introduction qui permettent de régler la valeur de consigne souhaitée du glissement.

13. Dispositif selon l'une des revendications 9 à 12, **caractérisé en ce qu'**il utilise une vanne proportionnelle (42) pour régler la pression d'accouplement.

14. Dispositif selon l'une des revendications 9 à 13, **caractérisé en ce qu'**il présente des moyens de réglage (50) qui permettent de prédéterminer la charge maximale et en particulier le couple de rotation maximum en définissant un débit actif maximum à travers la vanne.

15. Dispositif selon les revendications 9 à 13, **caractérisé en ce qu'**il présente des moyens de détection qui identifient automatiquement l'appareil monté, de préférence une solution dite "plug and play" dans laquelle la détection s'effectue par une interface (52) CAN, ISO, LBS ou similaire, et **en ce que** le couple de rotation maximum qui agit est prédéterminé automatiquement en fonction de l'identification en imposant le débit maximum actif à travers la vanne.

16. Dispositif selon les revendications 9 à 15, **caractérisé en ce qu'**il présente des moyens, de préférence un affichage (48) du couple de rotation, qui permettent d'afficher et/ou de surveiller en permanence le couple de rotation qui agit sur la prise de force (20).
